Europäisches Patentamt

European Patent Office

Office européen des brevets

(19)

(11) Veröffentlichungsnummer : **0 171 453**
**B1**

(12) **EUROPÄISCHE PATENTSCHRIFT**

(45) Veröffentlichungstag der Patentschrift :
11.01.89

(51) Int. Cl.⁴ : **F 16 P 3/08**

(21) Anmeldenummer : **84109757.9**

(22) Anmeldetag : **16.08.84**

(54) Vorrichtung zur Sicherheitsverriegelung bei Schutzeinrichtungen zum Verhindern des Eingriffs in gefahrbringende Räume.

(43) Veröffentlichungstag der Anmeldung :
**19.02.86 Patentblatt 86/08**

(45) Bekanntmachung des Hinweises auf die Patenterteilung : **11.01.89 Patentblatt 89/02**

(84) Benannte Vertragsstaaten :
**AT BE CH DE FR GB IT LI LU NL SE**

(56) Entgegenhaltungen :
EP--A-- 0 109 590
DE--A-- 2 928 507
FR--A-- 2 233 558
US--A-- 1 899 234
US--A-- 2 469 113
US--A-- 4 056 276
ENGINEERING, Band 216, Nr. 12, Dezember 1976, Seiten I-VIII; "Machinery guarding"

(73) Patentinhaber : **Letzel, Helmut**
**Dünnwalder Mauspfad 382**
**D-5000 Köln 80 (DE)**

(72) Erfinder : **Wollenhaupt, Jakob**
**Ziegeleiweg 14**
**D-5000 Köln 90 (DE)**

(74) Vertreter : **Köhne, Friedrich, Dipl.-Ing.**
**Postfach 250265 Lothringer Strasse 81**
**D-5000 Köln 1 (DE)**

**Beschreibung**

Die Erfindung bezieht sich auf eine Vorrichtung zur Sicherheitsverriegelung bei Schutzeinrichtungen zum Verhindern des Eingriffs in Gefahr bringende Räume, insbesondere bei Maschinen mit gefährlichen Bewegungen oder bei stromführenden Einrichtungen in Gehäusen, wobei ein Kniehebel mit einem angelenkten Schließhebel vorgesehen ist, der zwei Totpunktstellungen aufweist und mit einem an der Schutzeinrichtung fest angebrachten mit einer Schließkurve versehenen Betätigungsteil derart zusammenwirkt, daß in der einen Totpunktstellung des Kniehebels der Schließhebel und das Betätigungsteil verriegelnd ineinandergreifen und der gefährliche Betriebszustand einschaltbar ist, und daß in der anderen Totpunktstellung der gefährliche Betriebszustand abgeschaltet und das Betätigungsteil mit der Schutzeinrichtung freigegeben ist.

Stand der Technik

Maschinen mit gefahrbringenden Bewegungen, ferner stromführende Gehäuse, z. B. Schaltschränke, unterliegen strengen gesetzlichen Bestimmungen, um die an ihnen tätigen Menschen zu schützen. In der DIN-Vornorm 31.001 sind die sicherheitstechnischen Anforderungen, die an solche Verriegelungsvorrichtungen gestellt werden, zusammengefaßt. Hierin sind beispielhafte Lösungen angegeben, wobei folgendes Schutzziel angestrebt wird. Solange sich die Schutzeinrichtung nicht in der Schutzstellung befindet, darf der gefährliche Betriebszustand nicht eingeschaltet werden können.

Bei allen bisher bekannten Lösungen sowie auch bei allen marktgängigen Ausführungen geht man von dem Prinzip aus, die gefährliche Bewegung durch elektrische Schalter abzusichern. Diese können als Stromkreisführer und als Stromkreisschließer ausgeführt sein. Die eine Ausführung stellt eine Verriegelung unter Strom dar. Die Schutzvorrichtung, z. B. eine Schutzhaube oder eine Schiebetür, wird durch einen Bolzen oder Schieber verriegelt, welcher durch einen Magneten betätigt und in der Schließstellung unter Strom gehalten wird. Die weitere Ausführung stellt eine Verriegelung unter Federdruck dar. Hierbei wird ein Schließbolzen bzw. Schieber durch eine Feder in die Verriegelungsstellung gebracht und dort durch Federdruck festgehalten. Das Öffnen erfolgt durch einen Magneten, welcher so groß zu bemessen ist, daß er die Federkraft mit Sicherheit überwindet. Beim Stromausfall verhalten sich beide Ausführungen unterschiedlich. Bei der ersten genannten Ausführung mit einer Verriegelung unter Strom wird sich infolge des Stromausfalles die Verriegelungsvorrichtung selbsttätig öffnen, weil der Magnet durch seine Rückstellfeder in die Ausgangsstellung zurückgedrückt wird. Die Schutzhaube bzw. die Tür kann dann geöffnet werden. Wenn dies schnell geschieht, kann es vorkommen, daß sich die gefährliche Bewegung durch die Schwungmassen noch im Auslauf befindet. Bei unbedachtsamem Zugriff sind dann Unfälle nicht auszuschließen. Um dieser Gefahr vorzubeugen, wäre eine zusätzliche Zeitverzögerung, vorzugsweise mechanischer Art, erforderlich, wodurch sich insgesamt ein nicht unerheblicher Bauaufwand ergeben würde, ohne eine wirkliche Zuverlässigkeit zu gewährleisten. Der zweiten bekannten Ausführung, nämlich der Verriegelung unter Federdruck, ist das Öffnen durch den Magneten bei Stromausfall nicht möglich. Man muß dann die Feder auf irgendeine geschickte Art manuell zurückdrücken, um das Öffnen von Schutzhaube oder Tür zu ermöglichen. Dies wäre dann aber auch während der gefährlichen Bewegung durchführbar. Hierdurch würde die Schutzvorrichtung also wirkungslos.

Eine Sicherheitstürverriegelung dieser vorerläuterten Art ist aus der EP-A-109 590 bekannt, und zwar arbeitet diese Verriegelung mit zwei Grenzlagefühlern mit zugehörigen Schaltern, einer elektromechanischen Sperreinrichtung mit einem Hubmaneten und mit einem Verriegelungsbolzen.

Eine weitere Verriegelungsvorrichtung für eine Tür ist aus der US-A-4 056 276 bekannt. Bei dieser Vorichtung ist ein Kniehebel vorgesehen, in dessen verstrebter Totpunktstellung eine Schließhebel in ein passendes Betätigungsteil der zu verriegelnden Tür hineingreift.

Eine zu Anfang erläuterte Sicherheitsverriegelungs-Vorrichtung für eine Maschinenschutztür ist aus der FR-A-2 233 558 als bekannt zu entnehmen. Hierbei ist insbesondere in einem Gehäuse ein Kniehebel vorgesehen, der mit einem Schließhebel verbunden ist, so daß in einer Totpunktstellung der Schließhebel in ein Betätigungsteil eingreift, wodurch eine Verriegelung stattfindet. Der gefährliche Zusstand kann mit einem elektrischen Schalter abgeschaltet werden. Es ist ferner ein Elektromagnet vorgesehen, der an einem äußeren Ende eines Hebelarmes des Kniehebels angreift. Dieser Elektromagnet ist jedoch während der Verriegelungsstellung stromlos und er dient nur dazu, die Verriegelung wieder aufzuheben.

Darstellung der Erfindung

Der Erfindung liegt dem gegenüber die Aufgabe zugrunde, eine Vorichtung zur Sicherheitsverriegelung zu schaffen, bei der die Verriegelung aktiv in Abhängigkeit von dem Betriebsstrom sichert und ein Öffnen bzw. Entriegeln auch unter Anwendung großer Kräfte nicht möglich ist.

Die gestellte Aufgabe wird erfindungsgemäß dadurch gelöst, daß an dem mittleren Gelenk des Kniehebels ein Zughebel angelenkt ist, welcher mit dem Anker eines Haltemagneten durch Gelenk verbunden ist.

Vorteilhafte Ausgestaltungen der erfindungsgemäßen Vorrichtung ergeben sich aus den Unteransprüchen.

Beschreibung der Zeichnung

In der Zeichnung sind Ausführungsbeispiele der Erfindung im Schema dargestellt, und zwar zeigen :

Figur 1 eine Seitenansicht auf eine Drehmaschine bei geöffneter Schutzeinrichtung,

Figur 2 eine Seitenansicht gemäß Figur 1 bei geschlossener Schutzeinrichtung,

Figur 3 eine Einzelheit auf Figur 2, jedoch in vergrößertem Maßstab, nämlich die Sicherheitsverriegelungsvorrichtung in verriegelter Stellung,

Figur 4 die Sicherheitsverriegelungsvorrichtung gemäß Figur 3, jedoch in entriegelter Stellung.

Figur 5 eine Einzelheit aus Figur 3 im weiterhin vergrößertem Maßstab in verriegelter Stellung.

Figur 6 die Einzelheit gemäß Figur 5, jedoch in entriegelter Stellung,

Figur 7 eine Sicherheitsverriegelungsvorrichtung gemäß Figur 4, jedoch in einer anderen Ausführung in entriegelter Stellung,

Figur 8 eine Ansicht gemäß Figur 7, jedoch in verriegelter Stellung,

Figur 9 einen Schnitt zu Figur 7 gemäß Schnittlinie a-b in Figur 7, in vergrößertem Maßstab.

Fig. 10 einen Vertikalschnitt gemäß Schnittlinie e-f in Fig. 4,

Fig. 11 eine Draufsicht auf das geschlossene Gehäuse einer Sicherheitsverriegelungsvorrichtung gemäß Pfeil A in Fig. 10 und

Fig. 12 eine Seitenansicht hierzu gemäß Pfeil B in Fig. 11.

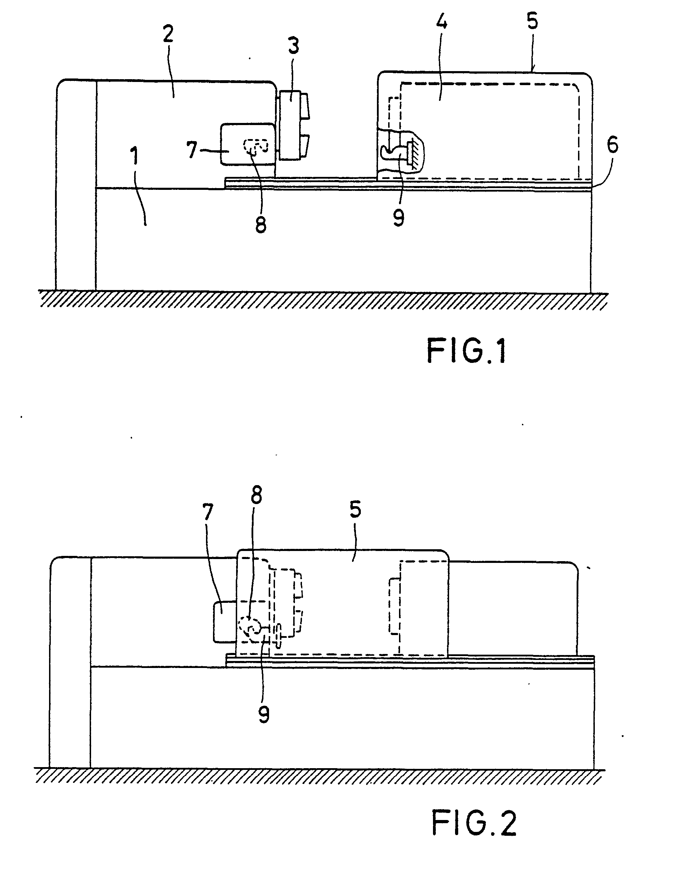

In den Figuren 1 und 2 ist als Anwendungsbeispiel für die erfindungsgemäße Vorrichtung eine Drehmaschine in schematischer Darstellung gewählt. Auf dem Maschinenbett 1 ist links im Bild der Spindelstock 2 mit Antrieb und Arbeitsspindel sowie das Drehbankspannfutter 3 angeordnet. Rechts befindet sich ein Reitstock oder Revolverkopfträger 4, der in der Zeichnung durch eine Schutzhaube 5 überdeckt ist, welche bei diesem Ausführungsbeispiel die Schutzeinrichtung darstellt. Diese Schutzhaube 5 kann auf Führungsschienen 6 gleitend oder rollend in Richtung zum Spindelstock 2 hin bewegt werden. Am Spindelstock 2 ist bei diesem Ausführungsbeispiel das Gehäuse 7 der nachfolgend noch im einzelnen erläuterten Vorrichtung zur Sicherheitsverriegelung befestigt, in welchem ein Schließhebel 8 vorgesehen ist, der nach der nachfolgenden Beschreibung betätigt werden muß. Mit dem Schließhebel 8 wirkt ein Betätigungsteil 9 zusammen, welches mit einer Schließkurve versehen ist und welches mittels Flansch in der Schutzhaube 5 befestigt ist. Das Gehäuse 7, der Schließhebel 8 und das Betätigungsteil 9 sind in der Zeichnung der Deutlichkeit halber stark vergrößert dargestellt. Im Verhältnis zur Drehmaschine sind sie in Wirklichkeit kleiner ausgeführt.

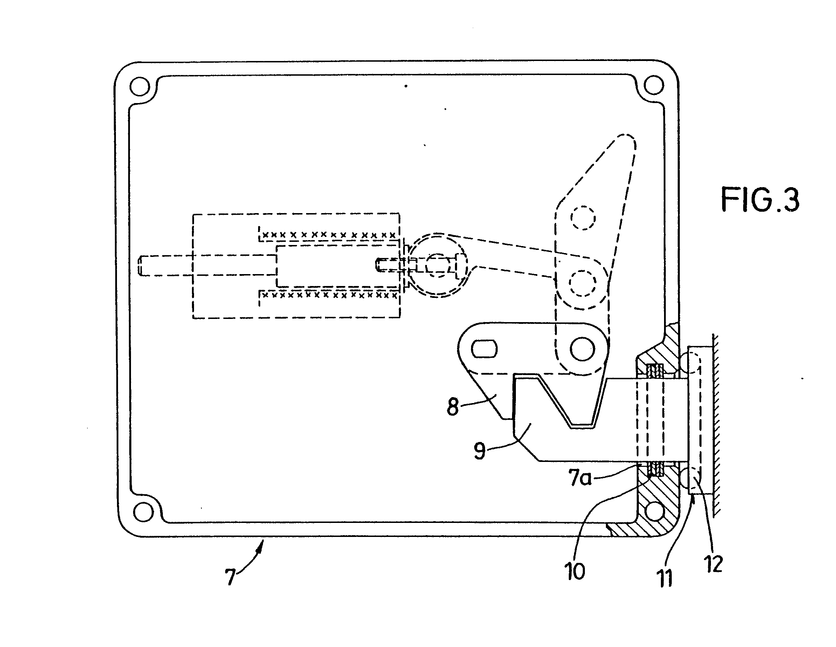

Fig. 2 veranschaulicht die Drehmaschine nach Figur 1 mit geschlossener Schutzhaube 5 in der Betriebsstellung. In dieser Betriebsstellung sind der Schließhebel 8 und das Betätigungsteil 9 durch das Vorschieben der Schutzhaube 5 in Eingriff miteinander gekommen und haben dadurch im Innern des Gehäuses 7 die reine Totpunktstellung des Kniehebels bewirkt, deren Zweck und Auswirkung anhand der folgenden Figuren 3 bis 9 erläutert ist.

Fig. 3 zeigt das Gehäuse 7 bei geöffnetem bzw. abgenommenen Deckel. Der besseren Deutlichkeit halber sind der Schließhebel 8 und das Betätigungsteil 9, welches mit einer Schließkurve versehen ist, in ausgezogenen Linien dargestellt, und zwar im geschlossenem bzw. verriegeltem Zustand bei vorgeschobener Schutzhaube 5 gemäß Fig. 2, während das Kniehebel-System gestrichelt gezeichnet ist. Das Gehäuse 7 weist auf der nach der Schutzhaube zu liegenden, senkrecht zur Bildebene der Fig. 3 verlaufenden Stirnseite eine Einführöffnung 7 a für das Betätigungsteil 9 auf, welche im Schnitt dargestellt ist. Die Einführöffnung ist von einer Abstreifdichtung 10 umgeben, die dazu dient, das Betätigungsteil 9 von eventuell anhängenden Spänen oder sonstigen Verschmutzungen zu reinigen. Das Betätigungsteil 9 ist mittels eines Flansches 11 mit der Schutzhaube 5 fest verbunden. Dieser Flansch besitzt eine Ausnehmung, in welcher eine Dichtung 12 befestigt ist, die sich in geschlossenem, verriegeltem Zustand gemäß Fig. 3, d. h. in dem Arbeitszustand der Maschine, an die besagte Stirnseite des Gehäuses 7 anlegt und das Eindringen von Wasser, Öl, Spänen und dgl. in das Gehäuse 7 verhindert. Das Kniehebel-System befindet sich bei der Darstellung nach Fig. 3 in der einen Totpunktstellung, in welcher der Arbeitsstrom für die Maschine freigegeben ist, wie nachfolgend noch ausführlich erläutert ist.

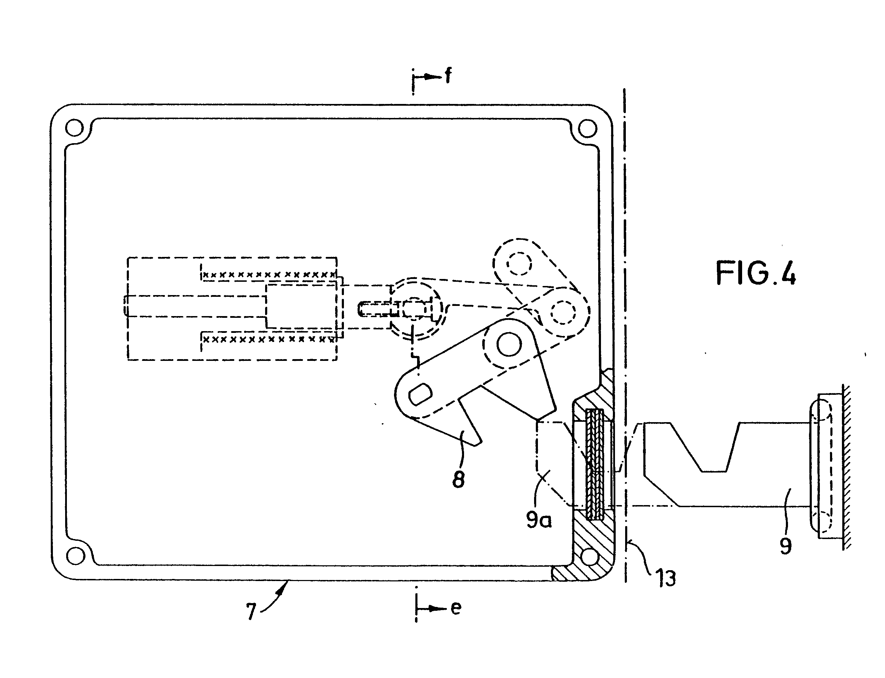

Fig. 4 zeigt das Gehäuse 7 in geöffneter Stellung gemäß Fig. 3, wobei sich das Kniehebel-System und der Schließhebel 8 in der anderen Totpunktstellung, und zwar in geöffneter Stellung befinden. Auch die Schutzhaube 5 und das Betätigungsteil 9 befinden sich in geöffneter Stellung. Im Vergleich mit der Stellung nach Fig. 3 hat der Schließhebel 8 zum Erreichen der Totpunktstellung nach Fig. 4 eine Schwenkbewegung ausgeführt, welche auf das hier ebenfalls gestrichelt eingezeichnete Kniehebel-System übertragen wird, so daß dieses wie gesagt in die zweite Totpunktstellung gebracht ist. In dieser zweiten Totpunktstellung ist der Arbeitsstrom für die Maschine unterbrochen. Den Augenblick, in welchem diese zweite Totpunktstellung erreicht wird, zeigt die strichpunktierte Stellung des Betätigungsteiles, die mit dem Bezugszeichen 9 a versehen ist. Die strichpunktierte Linie 13 deutet das linke stirnseitige Ende der Schutzhaube 5 bei der ausgezogen gezeichneten Stellung des Betätigungsteiles 9 an, so daß die Schutzhaube das Betätigunsteil 9 stets nach außen hin überdeckt. Ein weiter unten erläuterter Haltemagnet ist in den Figuren 3 und 4 ebenfalls in zwei Stellungen gestrichelt eingezeichnet.

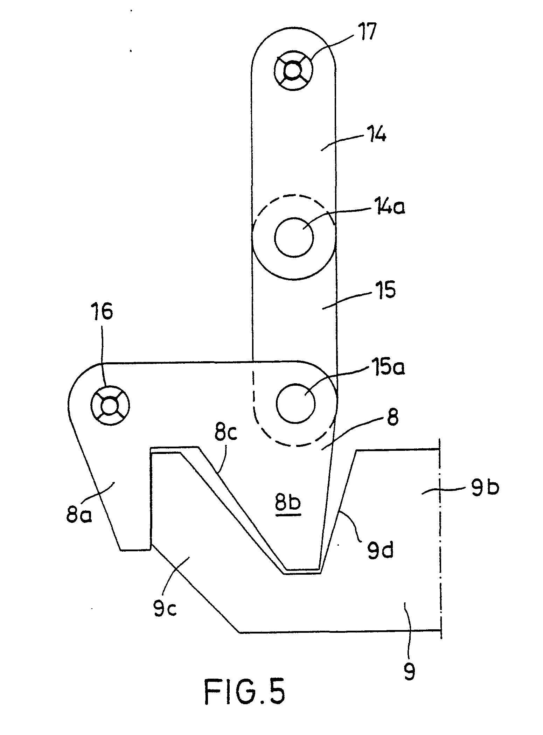

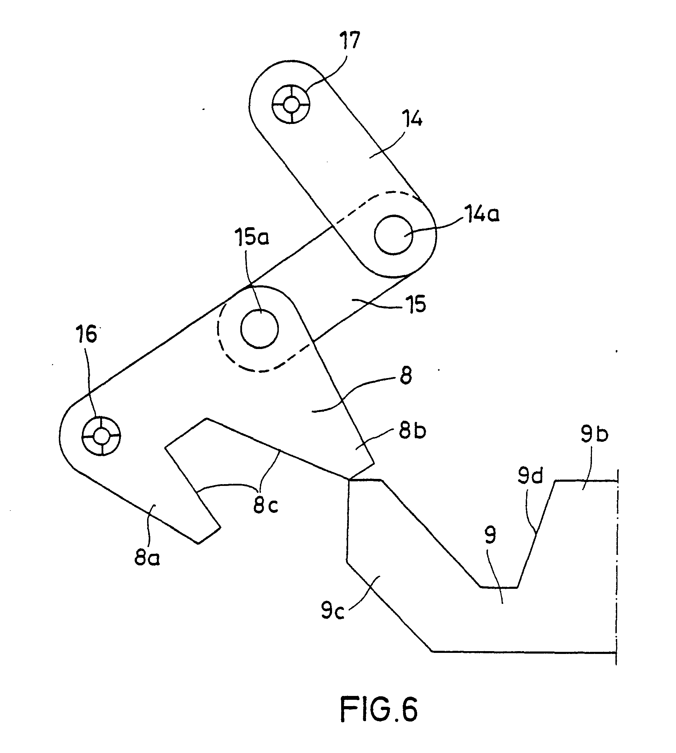

Die Figuren 5 und 6 veranschaulichen das Kniehebel-System in den beiden Totpunktstellungen. Der eigentliche Kniehebel besteht aus zwei durch ein mittleres Gelenk 14 a miteinander verbundenen Hebeln 14 und 15. Der eine von dem Schließhebel 8 abliegende Hebel 14 ist an seinem äußeren Ende in einem feststehenden Schwenklager 17 gehalten. Der andere Hebel 15 ist an dem von dem mittleren Gelenk 14 a abliegenden Ende mittels eines Gelenkes 15 a mit dem einen Ende des Schließhebels 8 verbunden. Das andere Ende des Schließhebels 8 ist in einem feststehenden Schwenklager 16 gehalten. Der Schließhebel 8 und das Betätigungsteil 9 sind wechselweise mit trapezartigen Vorsprüngen 8 a und 8 b bzw. 9 b und 9 c und Aussparungen 8 c bzw. 9 d versehen, die durch Einschieben des Betätigungsteiles 9 zwangsweise ineinandergreifen, wie Fig. 5 zeigt. In dieser einen wichtigen Totpunktstellung gemäß Fig. 5 liegen die Mittelpunkte der Gelenke 14 a und 15 a sowie des Schwenklagers 17 auf einer geraden Linie. In dieser Stellung greift der Vorsprung 8 b des Schließhebels 8 in die Aussparung 9 d des Betätigungsteiles 9, so daß diese miteinander verriegelt sind. Diese Totpunktstellung gemäß Fig. 5 entspricht dem gefährlichen Betriebszustand der Maschine. Fig. 6 zeigt die andere Totpunktstellung des Kniehebels mit den beiden Hebeln 14 und 15 sowie des Schließhebels 8 bei herausgezogenem Betätigungsteil 9. In dieser Totpunktstellung, in der die mit dem Betätigungsteil verbundene Schutzhaube 5 geöffnet werden kann, ist die Stromunterbrechung zur Maschine zwangsläufig mechanisch verriegelt, d. h. in dieser Totpunktstellung bleibt die Maschine stillgesetzt, so daß ein gefährlicher Betriebszustand nicht eintreten kann. Die Schwenkbewegung erfolgt um die feststehenden Schwenklager 16 und 17. Bei diesem vorerläuterten Ausführungsbeispiel kann das mechanisch betätigte Ein- und Ausschalten des Betriebsstromes für die Maschine durch geeignete angeschlossene Schalter oder sonstige Einrichtungen vorgenommen werden.

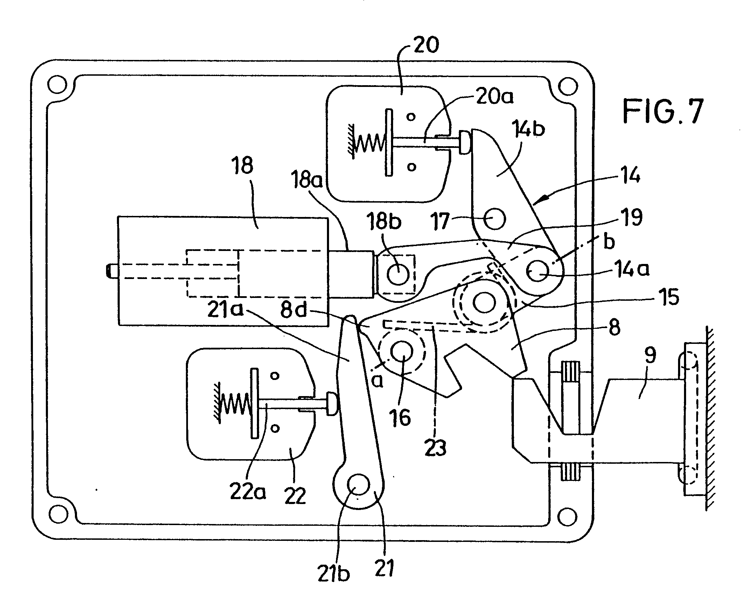

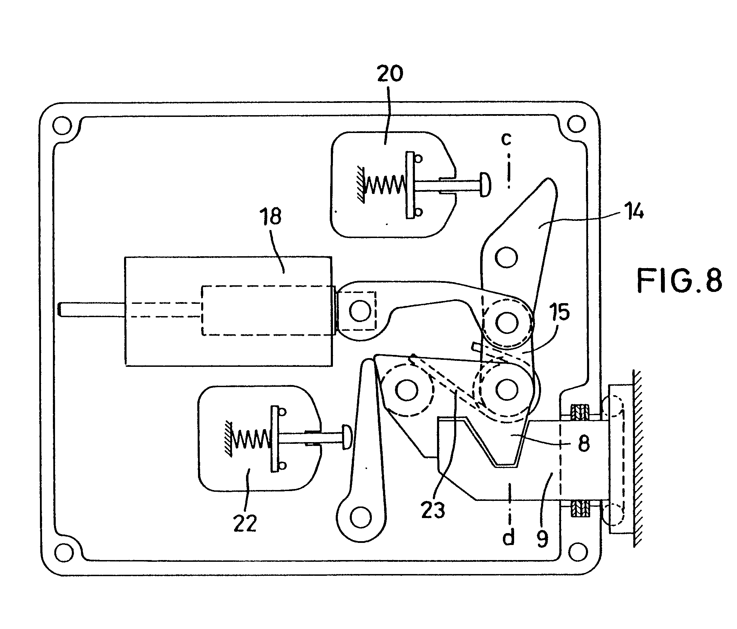

Die Figuren 7 und 8 veranschaulichen ein bevorzugtes Ausführungsbeispiel der Sicherheitsverriegelungsvorrichtung, und zwar sind hier die beiden Totpunktstellungen und das Zusammenwirken des Kniehebel-Systems mit elektrischen Schaltern 20 und 22 sowie einem Haltemagneten 18 veranschaulicht. An dem mittleren Gelenk 14 a des Kniehebels ist ein Zughebel 19 angelenkt, welcher mit dem Anker 18 a des Haltemagneten 18 durch ein weiteres Gelenk 18 b verbunden ist. Der eine Hebel 14 weist bei diesem Ausführungsbeispiel ein über das Schwenklager 17 hinausgehendes Verlängerungsteil 14 b auf, welches an einem Stößel 20 a des elektrischen Schalters 20 anliegt. Ferner weist der Schließhebel 8 ein über das Schwenklager 16 hinausgehendes Verlängerungsteil 8 d auf, welches an dem äußeren Ende 21 a eines in einem Schwenklager 21 b gehaltenen Schalthebels 21 anliegt. Der Schalthebel 21 wirkt mit dem Stößel 22 a des weiteren elektrischen Schalters 22 zusammen, so daß in der einen Totpunktstellung des Kniehebels und des Schließhebels 8 gemäß Fig. 7 die Schalter 20 und 22 geöffnet sind, der Betriebsstrom unterbrochen ist und der Haltemagnet 18 stromlos ist. In der anderen Totpunktstellung gemäß Fig. 8 ist bei mechanischer Verriegelung von Schließhebel 8 und Betätigungsteil 9 der Haltemagnet 18 eingeschaltet. In dieser Stellung hält der Haltemagnet 18 die Hebel 14, 15 des Kniehebels in dieser geradlinigen Totpunktstellung. Wie dargestellt, sind die Schalter 20 und 22 für den Betriebsstrom eingeschaltet. Wie Fig. 8 zeigt, ist der Haltemagnet 18 in dieser Stellung angezogen, d. h. der Anker 18 a ist im Vergleich zu der Stellung nach Fig. 7 nach links verschoben, so daß der Haltemagnet die Totpunktstellung nach Fig. 8 sichert. Das Öffnen der Schutzhaube 5 ist jetzt auch unter Anwendung größter Kräfte nicht mehr möglich. Zur Sicherung der Totpunktstellung sind nur geringe Kräfte erforderlich, so daß hierzu ein Kleinmagnet genügt. Dies wirkt sich besonders vorteilhaft für die Baugröße der gesamten Vorrichtung aus. Die Steuerung der Arbeitsmaschine schaltet in an sich bekannter Weise bei beendetem Arbeitsgang und Stillstand der Maschine den Strom automatisch ab. Damit wird auch der Haltemagnet 18 stromlos. Zum Öffnen der Schutzhaube 5 muß die jetzt ungesicherte Totpunktstellung der Hebel 14 und 15 überwunden werden. Hierzu ist ebenso wie zur Sicherung der Totpunktstellung nur eine geringe Kraft erforderlich, wenn diese so angesetzt wird, daß sie senkrecht zu der strichpunktierten Linie c-d in Fig. 8 wirkt. Zu diesem Zweck ist vorteilhafterweise eine leichte Schenkelfeder 23 angeordnet, welche durch die Schwenkung, die der Schließhebel 8 beim Einführen des Betätigungsteiles 9 ausführt, so gespannt wird, daß sie in der Totpunktstellung gemäß Fig. 8 diesen senkrechten Druck auf den Hebel 15, also senkrecht auf die Linie c-d ausübt.

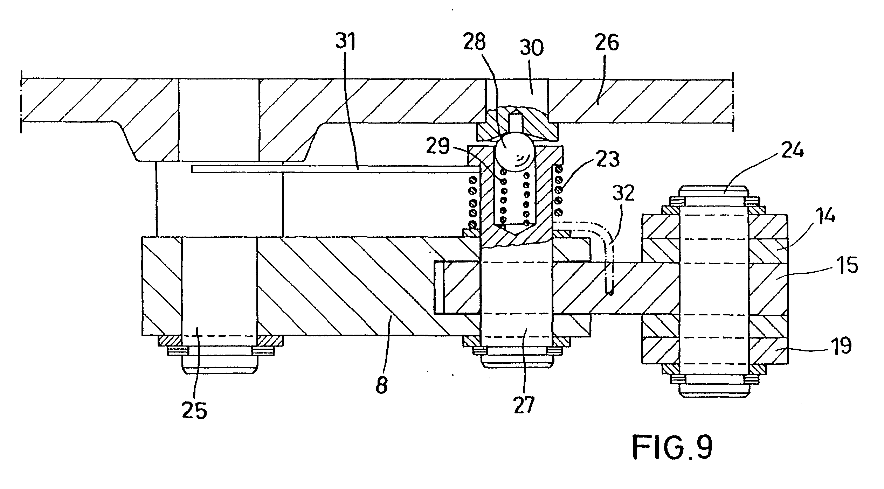

Fig. 9 zeigt in vergrößertem Maßstab einen Schnitt nach der Schnittlinie a-b in Fig. 7. Danach weist das mittlere Gelenk 14 a einen Gelenkbolzen 24 auf, durch welchen die Hebel 14 und 15 des Kniehebels und der Zughebel 19 zueinander schwenkbar zusammengehalten sind. Das Schwenklager 16 des Schließhebels 8 besitzt einen Standbolzen 25, der an der Innenwandung 26 des Gehäuses 7 befestigt ist. Der Schließhebel 8 und der eine Hebel 15 des Kniehebels sind durch einen Gelenkbolzen 27 gelenkig miteinander verbunden. Der Gelenkbolzen 27 ist nach der Innenwandung 26 des Gehäuses 7 hin verlängert. In diesem verlängerten Teil ist eine axiale Bohrung vorgesehen, in welcher eine Druckfeder 29 eingesetzt ist, die eine anliegende Rasterkugel 28 nach außen drückt. An einer Stelle der Innenwandung 26, die der Totpunktstellung für den ungefährlichen Betriebszustand gemäß Fig. 7 entspricht, ist eine Raststelle 30 angeordnet, in welche die Rasterkugel 28 bei dieser Totpunktstellung eingreift. Auf dem verlängerten Teil des Gelenkbolzens 27, und zwar auf dem Umfang ist eine Schenkelfeder 23 angeordnet, deren eines Schenkelende 31 sich auf dem Standbolzen 25 abstützt und deren anderes Schenkelende 32 an dem Hebel 15 angreift. Der Gelenkbolzen 27 erfüllt somit drei Aufgaben, nämlich er bewirkt eine bewegliche Verbindung zwischen Schließhebel 8 und Hebel 15, ferner bewirkt er das Einrasten der Rasterkugel 28 in der besagten Totstellung in die Rasterstelle 30 und schließlich trägt er die Schenkelfeder 23, die auch in den Figuren 7 und 8 zu ersehen ist. Die Rasterung durch Raststelle 30 und Rasterkugel 28 dient als zusätzliche Sicherung der Totpunktstellung nach Fig. 7, in welcher die Schenkelfeder 23 keinen Druck mehr auf den Hebel 15 ausübt. Diese Rasterung übt die gleiche Wirkung aus wie der Haltemagnet 18 in der Totpunktstellung nach Fig. 8. Da die Totpunktstellungen infolge der Gelenkreibung an sich schon genügend Sicherheit bieten, sind in beiden Fällen nur geringste Kräfte als zusätzliche Sicherung nötig. Die Sicherung durch den Haltemagneten 18 nach Fig. 8 wird in dieser Stellung der Rastersicherung nach Fig. 7 vorgezogen, weil dies die gefahrbringende Arbeitsstellung ist, in welcher mit Erschütterungen gerechnet werden muß. Die Sicherung durch Haltemagnet ist hier vorteilhafter, weil sie stets die geringste Abweichung von der Totpunktstellung sofort automatisch korrigiert.

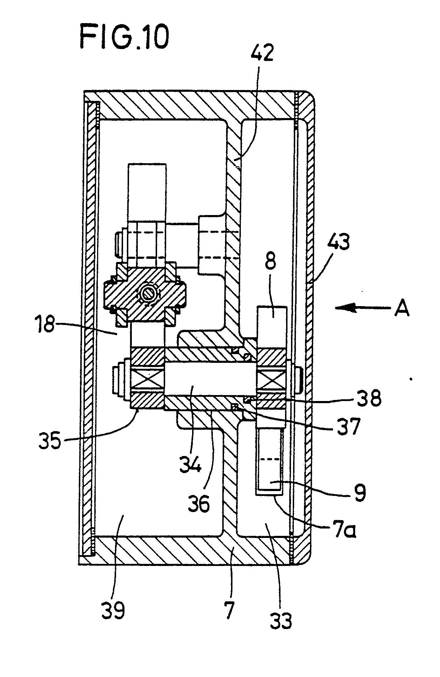

Fig. 10 zeigt eine besonders vorteilhafte Ausbildung des Gehäuses 7, und zwar in einem Schnitt entsprechend der Schnittlinie e-f in Fig. 4. Das Gehäuse 7 ist in diesem Ausführungsbeispiel in zwei voneinander getrennte Kammern 33 und 39 mittels einer senkrechten zur Bildebene der Fig. 10 und parallel zu dem Deckel 43 des Gehäuses verlaufende Zwischenwand 42 aufgeteilt. Die eine Kammer 39 ist zur Aufnahme des Haltemagneten 18, der Schalter 20 und 22 und der diese betätigenden oben erläuterten Bauteile bestimmt und nach außen hin vollständig abgedichtet. In der anderen Kammer 33 ist der Schließhebel 8 auf einer Welle 34 befestigt, die unter Zwischenschaltung einer Lagerbuchse 36 und Dichtungen 37 und 38 durch die Zwischenwand 42 hindurch in die abgedichtete Kammer 39 hineinragt. Die Welle 34 wirkt mit einem Hebel 35 zusammen, der die Schwenkbewegung des Schließhebels 8 auf den beschriebenen Kniehebelmechanismus bzw. das Kniehebel-System überträgt. Die Kammer 33 ist vorteilhafterweise ebenfalls weitgehend geschlossen und von außen unzugänglich. Es ist hier lediglich, wie zu Fig. 3 erläutert, eine Einführöffnung 7 a für das Betätigungsteil 9 vorgesehen.

Die in Fig. 10 gezeigte Aufteilung des Gehäuses 7 in zwei getrennte Kammern ist erforderlich, wenn die beschriebenen Teile der Sicherheitsverriegelungsvorrichtung vor dem Einfluß flüssiger, insbesondere aggressiver Kühlmittel oder starker Staubeinwirkung geschützt werden müssen. Dies gilt insbesondere für alle elektrischen Geräte, d. h. für den Haltemagneten 18 und die beschriebenen elektrischen Schalter.

Auch bei dem Ausführungsbeispiel nach Fig. 10 kann das Betätigungsteil 9 beim Schließen der Schutzhaube 5 in die Kammer 33 eingeführt werden, wo der Schließhebel 8 wie beschrieben betätigt wird. Wie zu Fig. 3 beschrieben wurde, ist die Einführungsöffnung auch hier durch eine Abstreifdichtung 10 und eine Dichtung 12 gegen Verunreinigung so geschützt, daß in trockenem Betrieb und in sauberen Räumen der Schutz ausreicht. Es empfiehlt sich ferner, den Schließhebel 8 mittels Vielkant auf der Welle 34 zu befestigen.

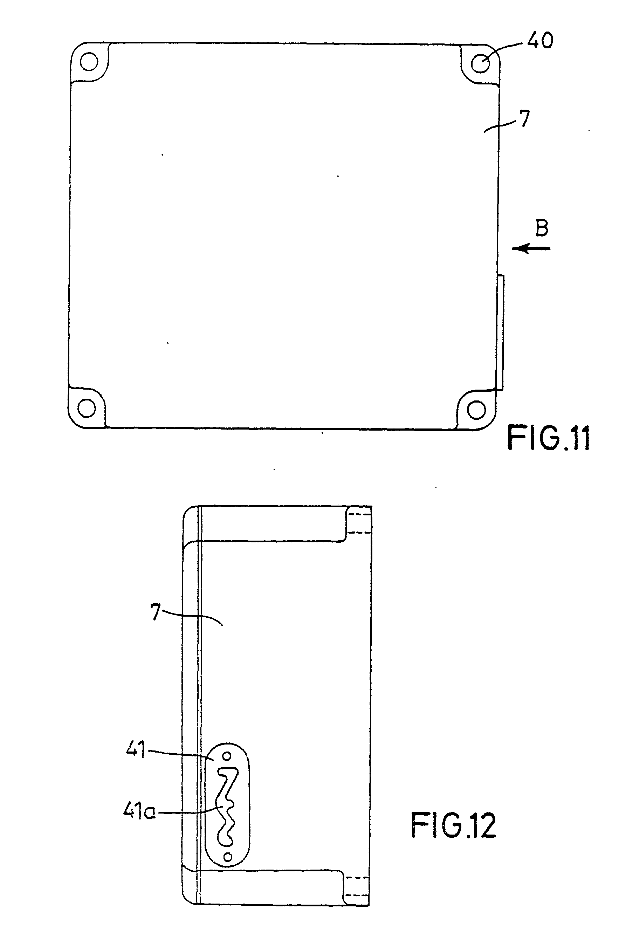

Fig. 11 stellt die Vorderansicht des geschlossenen Gehäuses 7 in Pfeilrichtung A nach Fig. 10 dar. Sie zeigt ferner die Befestigungsart durch vier Schraubenlöcher 40, so daß das Gehäuse 7 an einer passenden Stelle des Maschinengestelles beispielsweise befestigt werden kann.

Fig. 12 ist die Seitenansicht des Gehäuses 7 gemäß Pfeil B in Fig. 11. An der Einführöffnung des Gehäuses für das Betätigungsteil 9 ist ein Flansch 41 fest angebracht, welcher eine schließblechförmige bzw. gezackte Öffnung 41 a aufweist. Der Querschnitt des Betätigungsteiles 9 ist dieser Öffnung formmäßig angepaßt. Durch diese Art der Ausbildung der Einführöffnung bzw. des Flansches 41 und des Betätigungsteiles 9 wird verhindert, daß der Schließhebel 8 von außen in unbefugter Weise, beispielsweise mittels eines Schraubenziehers, betätigt werden kann.

**Patentansprüche**

1. Vorrichtung zur Sicherheitsverriegelung bei Schutzeinrichtungen zum Verhindern des Eingriffs in Gefahr bringende Räume, insbesonders bei Maschinen mit gefährlichen Bewegungen oder bei stromführenden Einrichtungen in Gehäusen, wobei ein Kniehebel (14, 15) mit einem angelenkten Schließhebel (8) vorgesehen ist, der zwei Totpunktstellungen aufweist und mit einem an der Schutzeinrichtung (5) fest angebrachten mit einer Schließkurve versehenen Betätigungsteil (9) derart zusammenwirkt, daß in der einen Totpunktstellung des Kniehebels (14, 15) der Schließhebel (8) und das Betätigungsteil (9) verriegelnd ineinandergreifen und der gefährliche Betriebszustand einschaltbar ist, und daß in der anderen Totpunktstellung der gefährliche Betriebszustand abgeschaltet und das Betätigungsteil (9) mit der Schutzeinrichtung (5) freigegeben ist, dadurch gekennzeichnet, daß an dem mittleren Gelenk (14a) des Kniehebels (14, 15) ein Zughebel (19) angelenkt ist, welcher mit dem Anker (18a) eines Haltemagneten (18) durch Gelenk (18b) verbunden ist.

2. Vorrichtung nach Anspruch 1, dadurch gekennzeichnet, daß der Schließhebel (8) und das Betätigungsteil (9) wechselweise mit trapezartigen Vorsprüngen (8a, 8b, 9b, 9c) und Aussparungen (8c, 9d) versehen sind, die durch Einschieben des Betätiggungsteiles (5) zwangsweise ineinandergreifen, so daß der Kniehebel (14, 15) in die eine Totpunktstellung entsprechend dem gefährlichen Betriebszustand gelangt und den Schließhebel (8) verriegelt.

3. Vorrichtung nach Anspruch 1 oder 2, dadurch gekennzeichnet, daß der Kniehebel aus zwei durch ein mittleres Gelenk (14a) miteinander verbundenen Hebeln (14, 15) besteht, daß der eine von dem Schließhebel (8) abliegende Hebel (14) an seinem äußeren Ende in einem feststehenden Schwenklager (17) gehalten ist, daß der andere Hebel (15) an dem von dem mittleren Gelenk (14a) abliegenden Ende mittels eines Gelenkes (15a) mit dem einen Ende des Schließhebels (8) verbunden ist, und daß das andere Ende des Schließhebels (8) in einem feststehenden Schwenklager (16) gehalten ist.

4. Vorrichtung nach Anspruch 3, dadurch gekennzeichnet, daß der eine Hebel (14) ein über das Schwenklager (17) hinausgehendes Verlängerungsteil (14b) aufweist, welches an einem Stößel (20a) eines elektrischen Schalters (20) anliegt, daß der Schließhebel (8) ein über das Schwenklager (16) hinausgehendes Verlängerungsteil (8d) aufweist, welches an dem äußeren Ende (21a) eines in einem Schwenklager (21b) gehaltenen Schalthebels (21) anliegt, und daß der Schalthebel (21) mit dem Stößel (22a) eines weiteren elektrischen Schalters (22) zusammenwirkt, so daß in der einen Totpunktstellung des Kniehebels (14, 15) die Schalter (20, 22) geöffnet sind, der Betriebsstrom unterbrochen ist und der Haltemagnet (18) stromlos ist, während in der anderen Totpunktstellung bei mechanischer Verriegelung von Schließhebel (8) und Betätigungsteil (9) der Haltemagnet (18) eingeschaltet sind.

5. Vorrichtung nach einem der vorhergehenden Ansprüche, dadurch gekennzeichnet, daß der Kniehebel (14, 15) mit allen angeschlossenen Bauteilen in einem geschlossenen, von außen unzugänglichen Gehäuse (7) angeordnet ist, und daß das Gehäuse eine Einführöffnung für das Betätigungsteil (9) aufweist, die von einer Abstreifdichtung (10) umgeben ist.

6. Vorrichtung nach einem der vorhergehenden Ansprüche, dadurch gekennzeichnet, daß das Betätigungsteil (9) mittels eines Flansches (11) mit der Schutzeinrichtung (5) verbunden ist, und daß in einer Ausnehmung dieses Flansches eine Dichtung (12) angeordnet ist.

7. Vorrichtung nach Anspruch 5 oder 6, dadurch gekennzeichnet, daß an der Einführöffnung des Gehäuses (7) ein Flansch (41) fest angebracht ist, welche eine schließblechförmige bzw. gezackte Öffnung (41a) aufweist, und daß der Querschnitt des Betätigungsteiles (9) dieser Öffnung formmäßig angepaßt ist.

8. Vorrichtung nach einem der Ansprüche 2 bis 7, dadurch gekennzeichnet, daß das mittlere Gelenk (14a) einen Gelenkbolzen (24) aufweist, durch welchen die Hebel (14, 15) des Kniehebels und der Zughebel (19) zueinander schwenkbar zusammengehalten sind, daß das Schwenklager (16) des Schließhebels (8) einen Standbolzen (25) aufweist, der an der Innenwandung (26) des Gehäuses (7) befestigt ist, und daß der Schließhebel (8) und der eine Hebel (15) des Kniehebels durch einen Gelenkbolzen (27) gelenkig miteinander verbunden sind.

9. Vorrichtung nach Anspruch 8, dadurch gekennzeichnet, daß der Gelenkbolzen (27) nach der Innennwandung (26) des Gehäuses (7) hin verlängert ist und in einer axialen Bohrung dieses verlängerten Teiles eine Druckfeder (29) und eine Rasterkugel (28) trägt, welche in eine Raststelle (30) eingreift, die entsprechend der Totpunktstellung für den ungefährlichen Betriebszustand angeordnet ist, und daß das verlängerte Teil auf seinem Umfang eine Schenkelfeder (23) hält, deren eines Schenkelende (31) sich auf dem Standbolzen (25) abstützt und deren anderes Schenkelende (32) an dem Hebel (15) angreift.

10. Vorrichtung nach einem der Ansprüche 5 bis 9, dadurch gekennzeichnet, daß das Gehäuse (7) in zwei voneinander getrennte Kammern (33, 39) aufgeteilt ist, daß die eine Kammer (39) zur Aufnahme des Haltemagneten (18), der Schalter (20, 22) und der diese betätigenden Bauteile bestimmt und nach außen abgedichtet ist, daß der Schließhebel (8) in der anderen Kammer (33) auf einer Welle (34) befestigt ist, die unter Zwischenschaltung einer Lagerbuchse (36) und Dichtungen (37, 38) in die abgedichtete Kammer (39) hinenragt und mit einem Hebel (35) zusammenwirkt, der die Schwenkbewegung des Schließhebels (8) auf den Kniehebelmechanismus überträgt, und daß die andere Kammer (33) mit der Einführöffnung für das Betätigungsteil (9) versehen ist.

**Claims**

1. Device for safety interlocking in protection equipment for preventing reaching into spaces which are dangerous, particularly in the came of machines with dangerous movements or with current-carrying equipment in housings, whereby a toggle lever (14, 15) is provided with a pivoted locking lever (8), which is provided with two dead centre positions and which interacts with an actuating part (9) being mounted stationary on the protection device (5) and being provided with a locking cam, in such a way that in the one dead centre position of the toggle lever (14, 15) the locking lever (8) and the actuating part (9) interlock with each other and the dangerous operating condition may be switched on, and that in the other dead centre position the dangerous operating condition is switched off and the actuating part (9) with the protection device (5) is released, characterised in that a pull lever (19) is linked to the centre joint (14a) of the toggle lever (14, 15), said pull lever being connected to the anchor (18a) of a holding magnet (18) by means of a joint (18b).

2. Device according to claim 1, characterised in that the locking lever (8) and the actuation part (9) are alternately provided with trapezoidal protrusions (8a, 8b, 9b, 9c) and recesses (8c, 9d) which forcibly intermesh with each other by the insertion of the actuation part (9), so that the toggle lever (14, 15) is brought into the one dead centre position corresponding to the dangerous operating condition and interlocks the locking lever (8).

3. Device according to claim 1 or 2, characterised in that the toggle lever consists of two levers (14, 15) which are connected with each other by means of a centre joint (14a), that the one lever (14) facing away from the locking lever (8) is held in a stationary pivot bearing (17) with its outer end, that the other level (15) with the end facing away from the centre joint (14a) is connected with the one end of the locking lever (8) by means of a joint (15a), and that the other end of the locking lever (8) is held in a stationary pivot bearing (16).

4. Device according to claim 3, characterised in that the one lever (14) is provided with an extension part (14b) extending beyond the pivot bearing (17) and engaging a plunger (20a) of an electrical switch (20), that the locking lever (8) is provided with an extension part (8d) extending beyond the pivot bearing (16) engaging on the outer end (21a) of a switch lever (21) being held in a pivot bearing (21b), and that the switch lever (21) interacts with the plunger (22a) of a further electrical switch (22), so that in the one dead centre position of the toggle lever (14, 15) the switches (20, 22) are opened, the operating current is interrupted and the holding magnet (18) is without current, whilst in the other dead centre position with mechanical interlocking of locking lever (8) and actuating part (9) the holding magnet (18) is switched on.

5. Device according to any one of the preceding claims, characterised in that the toggle lever (14, 15) with all connected structural parts is disposed in a closed housing (7) which is not accessible from the outside, and that the housing is provided with an insertion opening for the actuating part (9) being surrounded by a wipe off packing (10).

6. Device according to any one of the preceding claims, characterised in that the actuating part (9) is connected to the protection device (5) by means of a flange (11), and that a packing (12) is provided in a recess of this flange.

7. Device according to claim 5 or 6, characterised in that a flange (41) is rigidly mounted on the insertion opening of housing (7) having a sheet metal lock up shape or serrated opening (41a), and that the cross section of the actuating part (9) is adapted in its shape to this opening.

8. Device according to any one of claims 2 to 7, characterised in that the centre joint (14a) is provided with a joint bolt (24) with which the levers (14, 15) of the toggle lever and the pull lever (19) are held together in a pivotable movement toward each other, that the pivot bearing (16) of the locking lever (8) is provided with a position bolt (25) being mounted on the inner wall (26) of the housing (7), and that the locking lever (8) and the one lever (15) of the toggle lever are pivotably connected to each other by means of a joint bolt (27).

9. Device according to claim 8, characterised in that the joint bolt (27) is extended towards the inner wall (26) of housing (7) and supports in an axial boring of this extended part a pressure spring (29) and a locking ball (28) which locks into a locking location (30) which is provided corresponding to the dead centre position for the non-dangerous operating position, and that the extended part supports on its circumference a shank spring (23), whose one shank end (31) is supported on the position bolt (25) and whose other shank end (32) engages on lever (15).

10. Device according to any one of claims 5 to 9, characterised in that the housing (7) is split up into two separate chambers (33, 39), that the one chamber (39) is intended to accommodate the holding magnet (18), the switches (20, 22) and the structural parts actuating them and is sealed towards the outside, that the locking lever (8) is mounted on a shaft (34) in the other chamber (33), whereby this shaft extends into the sealed chamber (39) by incorporating a bearing bushing (36) and packings (37, 38) and interacts with a lever (35) which transmits the pivot movement of the locking lever (8) to the toggle lever mechanism, and that the other chamber (33) is provided with the insertion opening for the actuating part (9).

## Revendications

1. Dispositif de verrouillage de sécurité pour appareils de protection servant à empêcher l'entrée dans des volumes créant un danger, notamment pour des machines à mouvements dangereux ou pour des appareils conducteurs de courant dans des habitations, dispositif où il est prévu un levier coudé (14, 15) sur lequel est articulé un levier de fermeture (8), qui comporte deux positions de point mort et qui coopère avec une partie d'actionnement (9), fixée sur l'appareil de protection (5) et pourvue d'une came de fermeture, de telle sorte que, dans une position de point mort du levier coudé (14, 15), le levier de fermeture (8) et la partie d'actionnement (9) s'accrochent l'un dans l'autre avec effet de verrouillage et l'état de service dangereux puisse être établi, tandis que, dans l'autre position de point mort, l'état de service dangereux est supprimé et la partie d'actionnement (9) avec l'appareil de protection (5) est libérée, caractérisé en ce que sur l'articulation centrale (14a) du levier coudé (14, 15) est articulé un levier de traction (19) qui est relié par une articulation (18b) avec l'armature (18a) d'un électro-aimant de retenue (18).

2. Dispositif selon la revendication 1, caractérisé en ce que le levier de fermeture (8) et la partie d'actionnement (9) sont pourvus en alternance de saillies (8a, 8b, 9b, 9c) et d'évidements (8c, 8d) en forme de trapèze, qui s'accrochent l'un dans l'autre de façon forcée par enfoncement de la partie d'actionnement, de telle sorte que le levier coudé (14, 15) parvienne dans une des positions de point mort en correspondance à l'état de service dangereux et verrouille le levier de fermeture (8).

3. Dispositif selon la revendication 1 ou 2, caractérisé en ce que le levier coudé se compose de deux leviers (14, 15), reliés entre eux par une articulation centrale (14a), en ce que l'un des leviers (14) s'écartant du levier de fermeture est maintenu à son extrémité extérieure dans un palier de pivotement fixe (17), en ce que l'autre levier (15) est relié par son extrémité s'écartant de l'articulation centrale (14a) avec une des extrémités du levier de fermeture (8) au moyen d'une articulation (15a) et en ce que l'autre extrémité du levier de fermeture (8) est maintenue dans un palier de pivotement fixe (16).

4. Dispositif selon la revendication 3, caractérisé en ce qu'un des leviers (14) comporte une partie de prolongement (14b) dépassant supérieurement du palier de pivotement (17) et qui s'applique contre un poussoir (20a) d'un interrupteur électrique (20), en ce que le levier de fermeture (8) comporte une partie de prolongement (8d) dépassant du palier de pivotement (16) et qui s'applique contre l'extrémité extérieure (21a) d'un levier de commutation (21) maintenu dans un palier de pivotement (21b), et en ce que le levier de commutation (21) coopère avec le poussoir (22a) d'un autre interrupteur électrique (22) de telle sorte que, dans une des positions de point mort du levier coudé (14, 15) les interrupteurs (20, 22) soient ouverts, le courant de service sort interrompu et l'électro-aimant de retenue (18) soit désexcité alors que, dans l'autre position de point mort, et lors du verrouillage mécanique du levier de fermeture (8) et de la partie d'actionnement (9) de l'électro-aimant (18), les interrupteurs sont fermés.

5. Dispositif selon une des revendications précédentes, caractérisé en ce que le levier coudé (14, 15) est disposé avec toutes les parties auxquelles il est relié dans un carter fermé (7), inaccessible de l'extérieur, et en ce que le carter comporte une ouverture d'entrée de la partie d'actionnement (9), qui est entourée par une garniture d'étanchéité et protection (10).

6. Dispositif selon une des revendications précédentes, caractérisé en ce que la partie d'actionnement (9) est reliée à l'aide d'une bride (11) avec l'appareil de protection (5) et en ce qu'une garniture d'étanchéité (12) est disposée dans un évidement de cette bride.

7. Dispositif selon la revendication 5 ou 6, caractérisé en ce que sur l'ouverture d'entrée du carter (7) est fixée une bride (41) qui comporte une ouverture (41a) dentelée ou en forme de tôle d'obturation et en ce que la section de la partie d'actionnement (9) a une forme adaptée à cette ouverture.

8. Dispositif selon une des revendications 2 à 7, caractérisé en ce que l'articulation centrale (14a) comporte une broche d'articulation (24) par laquelle les leviers (14, 15) formant le levier coudé et le levier de traction (19) sont maintenus accouplés entre eux de façon pivotante, en ce que le palier (16) du levier de fermeture (8) comporte un pivot (25) qui est fixé sur la paroi intérieure (26) du carter (7) et en ce que l'un des leviers (15) du levier coudé et le levier de fermeture (8) sont reliés de façon articulée entre eux au moyen d'une broche (27).

9. Dispositif selon la revendication 8, caractérisé en ce que la broche d'articulation (27) est prolongée en direction de la paroi intérieure (26) du carter (7) et porte, dans un trou axial de cette partie prolongée, un ressort de pression (29) et une bille d'arrêt (28), qui s'accroche dans une position d'arrêt (30), qui est située en correspondance à la position de point mort pour l'état de service dangereux, et en ce que la partie prolongée maintient sur sa périphérie un ressort à branches (23) dont une extrémité de branche (31) s'appuie contre le pivot (25) et dont l'autre extrémité de branche (32) s'accroche sur le levier (15).

10. Dispositif selon une des revendications 5 à 9, caractérisé en ce que le carter (7) est divisé en deux chambres (33, 39) séparées l'une de l'autre, en ce qu'une des chambres (39) est agencée pour recevoir l'électro-aimant de retenue (18), les interrupteurs (20, 22) et les composants assurant leur actionnement, et est rendue étanche par rapport à l'extérieur, en ce que le levier de fermeture (8) est fixé dans l'autre chambre (33) sur un arbre (34), qui pénètre dans la chambre étanche (39), avec interposition d'un coussinet de palier (36) et de garnitures d'étanchéité (37, 38), et qui coopère avec un levier (35) qui transmet le mouvement de pivotement du levier de fermeture (8) au mécanisme à levier coudé, et en ce que l'autre chambre (33) est pourvue de l'ouverture d'entrée pour la partie d'actionnement (9).

FIG.1

FIG.2

1

FIG.3

7

8

9

7a

10

11

12

FIG.4

FIG.5

4

FIG.6

FIG.7

EP 0 171 453 B1

FIG.8

20

18

14

15

c

d    9

8

23

22

FIG.9

# FIG.10

FIG.11

FIG.12